# EUROPEAN PATENT SPECIFICATION

(11) **EP 3 512 393 B1**
(45) Date of publication and mention of the grant of the patent: **28.10.2020**
(21) Application number: 17794052.5
(22) Date of filing: 13.09.2017
(51) Int. Cl.: A47J 43/28, A47J 45/00, B25G 3/04, B25G 1/10, B25G 3/18, B25G 3/28, B25G 3/36

(54) **KITCHENWARE**
KÜCHENGESCHIRR
USTENSILE DE CUISINE

(30) Priority: 14.09.2016 IT 201600092600 U
(43) Date of publication of application: 24.07.2019
(73) Proprietor: Leber S.r.l., 25045 Castegnato (BS) (IT)
(72) Inventor: BERTON, Adriano, 25045 Castegnato (BS) (IT)
(74) Representative: Biesse S.r.l.
(86) International application number: PCT/IB2017/055518
(87) International publication number: WO 2018/051238

(56) References cited:
- GB-A- 2 360 440
- US-A- 4 821 417
- US-A1- 2003 234 188

## Description

### Field of the Invention

According to its most general aspect the present invention relates to a kitchen utensil and in particular refers to a kitchen utensil having a handle and a working portion.

### Prior Art

In the field of kitchen utensils such as cutlery, can openers, bottle openers, little moulds, and the like, the known art provides a variety of solutions.

There is, for example, cutlery made of metal as well as disposable cutlery made of plastic.

There are also other kitchen utensils, among which cutlery is an example, made of two materials, a material for the handle and a material for the working portion.

Usually the handle is made of plastic material or wood whereas the working portion is made of metal.

Although the handle and the working portion are made of different materials, they are integrally coupled to each other, in the sense that the utensil can be considered a single piece that can not be divided unless by splitting it.

Although utensils of the above type are advantageous, they are not free from drawbacks.

For example, utensils made in one piece and made of one material, generally carry out a single function, whereby a complete set of kitchen utensils is penalized by significant bulkiness.

If it is necessary or desired to carry the utensils, for example from the kitchen of a home to a terrace of the same home, or on a trip, for example to go camping, the significant weight of a complete set of kitchen utensils of the aforesaid type should also be considered.

Kitchen utensils made of multiple materials have not only the same above-described drawbacks but also the additional drawback associated with their washing, particularly but not exclusively in the dishwasher, as well as the drawback of their disposal.

In fact, different materials should be treated differently with regard to washing and drying temperatures, and also with regard to products used for the washing itself.

For example, if cutlery having wooden or plastic handle is treated in a dishwasher for a washing and drying cycle at a certain temperature, cutlery can be blemished, especially but not exclusively at the interface between the two different materials, because they behave differently when subjected to thermal treatments (washing and drying) and treatments with detergents.

When the coupling between the handle and the working part is no longer optimal, the utensil is doomed to a short operating life because its performance is no longer good, and to a certain extent its use can even become dangerous to the user, for example if the utensil is a knife.

The different reaction to thermal treatments and chemical agents of the different materials constituting the handle and the working portion can also result in aesthetic defects in utensils of the type considered above.

In addition, as above mentioned, the different materials of utensils of the above mentioned type can not be recycled because the two different materials can neither be separated from each other nor generally be worked together in recycling processes.

Document US 2003/0234188 A1 discloses a kitchen utensil kit including a single handle with one or more easily detachable and attachable accessories such as peelers, pizza cutters, cheese slicers, zesters, ice cream scoops, etc., wherein the kit includes stackable trays for storage in drawers or on countertops.

Document GB 2 360 440 A discloses a table cutlery item with interchangeable elements, comprises a cutlery item body which defines a tang detachably mounted within a handle element, wherein the tang may engage slot, provided on larger portion, of a male threaded ring, which has an external thread that can detachably mate with the internal thread provided in a female bush, which in turn can be inserted into the handle element, alternatively the female thread may be provided monolithically inside the handle, in which the cutlery item body can be either a spoon bowl, a fork, a knife and so forth and in which the cutlery item body may be made from steel and the handle may be made from plastic material.

Document US 4 821 417 A discloses a device for use by the manually disabled for carrying an eating utensil or the like includes an easily bendable "handle" for wrapping about the limb of a handicapped person, one end of which is terminated by any of an assortment of removable tools and utensils, in which once bent, the handle remains in its deformed position.

### Summary of the Invention

Object of the present invention is to provide a kitchen utensil having structural and functional characteristics able to overcome one or more of the drawbacks mentioned above with reference to the prior art and, in particular, a kitchen utensil whose use and application are particularly convenient.

According to the invention, the aforesaid object is achieved by a kitchen utensil according to claim 1. The kitchen utensil comprises a first portion including a handle of the aforesaid utensil and a second portion including at least one working portion of the aforesaid utensil, characterized in that it comprises combining means for a removable coupling of the aforesaid first portion with the aforesaid second portion, and in that the aforesaid first portion is made of a first material and the aforesaid second portion is made of a second material different from the aforesaid first material, wherein the aforesaid first material and the aforesaid second material are essentially completely recyclable.

The expression "essentially completely recyclable" means that the aforesaid first material and the aforesaid second material are pure materials, essentially pure materials, mixtures of similar and/or kindred materials, or composite materials such as metals, metal alloys, plastic materials, for example loaded with fibers and/or glass spheres so that, after having separated the aforesaid first portion and the aforesaid second portion from one another, the aforesaid first material and the aforesaid second material can be individually and completely recycled without further division.

Preferably, the aforesaid first material is a plastic material, more preferably selected from the group comprising polypropylene, acrylonitrile butadiene styrene (ABS), polyamide, polystyrene, polyamide 6,6, possibly loaded with fibers and/or glass spheres.

Preferably, the aforesaid second material is a metal material, more preferably selected from the group comprising steel, Zamak (zinc alloy), aluminium.

Preferably, the aforesaid combining means are selected from the group comprising snap-fit combining means, bayonet combining means, interlocked combining means, pressure combining means and similar combining means.

According to the invention, the aforesaid combining means comprise at least one housing seat obtained in the aforesaid first portion and at least one push-in element removably engaging the aforesaid at least one housing seat, wherein the aforesaid at least one push-in element is jutting from the aforesaid at least one working portion of the aforesaid second portion of the utensil.

According to the invention, the aforesaid combining means further comprise at least one sleeve element removably interposed between the aforesaid first portion and the aforesaid second portion.

According to the invention, the aforesaid at least one sleeve element is removably fitted on the aforesaid at least one push-in element. Then, the aforesaid at least one sleeve element is removably crossed by the aforesaid at least one push-in element. According to the invention,the aforesaid at least one sleeve element is removably inserted in the aforesaid at least one housing seat.

According to an embodiment of the present invention, the aforesaid at least one sleeve element preferably comprises at least one side opening, the aforesaid at least one sleeve element preferably constituting a so-called expansion insert.

Preferably, the aforesaid at least one side opening longitudinally extends on the aforesaid at least one sleeve element, or the aforesaid side opening circumferentially extends on the aforesaid at least one sleeve element, or else more side openings can be provided longitudinally and/or circumferentially extending on the aforesaid at least one sleeve element, being however possible to provide one or more openings obliquely extending on the aforesaid at least one sleeve element.

According to a further embodiment of the present invention, the aforesaid combining means further comprise a plurality of rounded male elements and a respective plurality of female elements preferably rounded too and complementary to the aforesaid male elements, wherein the aforesaid male elements are arranged on a side wall of the aforesaid at least one sleeve element and/or on an inner wall of the aforesaid first portion at the aforesaid at least one housing seat, and wherein the aforesaid female elements are arranged on the aforesaid side wall of the aforesaid at least one sleeve element and/or on the aforesaid inner wall of the aforesaid first portion at the aforesaid at least one housing seat.

According to a further embodiment of the present invention, the aforesaid combining means further comprise a threaded portion and a complementary indented portion at a side wall of the aforesaid at least one sleeve element and, respectively, on an inner wall of the aforesaid first portion at the aforesaid at least one housing seat.

According to a further embodiment of the present invention, the aforesaid combining means further comprise at least one bending element extended from a side wall of the aforesaid at least one sleeve element, and at least one through-hole extended in the aforesaid first portion, wherein the aforesaid at least one bending element has a protruding head at a free end thereof, the aforesaid protruding head being intended to engage-disengage the aforesaid at least one through-hole.

According to the invention and as stated hereinabove, preferably also the aforesaid at least one sleeve element is entirely made of plastic material, more preferably plastic material of the above-mentioned type.

Preferably, the aforesaid utensil is a knife, a spoon, a fork, a ladle, a can opener, a bottle opener, a corkscrew, a whisk, a grater, a pair of scissors, a pizza cutter, a dough cutter, a little mould, a blade sharpener, a rolling pin, and similar kitchen utensils, or a combination of two or more thereof.

According to the invention and as stated hereinabove, the aforesaid object is also achieved by a kit according to claim 5. The kit comprises a first plurality of first portions of kitchen utensils of the aforesaid type, that is to say wherein each first portion comprises a respective handle, and a second plurality of second portions of kitchen utensils of the aforesaid type, that is to say wherein each second portion includes at least one respective working portion, wherein combining means of the aforesaid type are provided for a removable coupling of each first portion with any second portion, wherein each first portion is made of a first material of the aforesaid type, and each second portion is made of a second material different from the first material, wherein the aforesaid first material and the aforesaid second material are essentially completely recyclable.

Preferably, in the aforesaid kit the number of the aforesaid first portions of the aforesaid first plurality of first portions is lower than the number of the aforesaid second portions of the aforesaid second plurality of second portions.

### Brief Description of the Figures

More features and advantages of the invention will be better understood by considering the following detailed description of some preferred, but not exclusive, embodiments illustrated by way of example only and without limitations, with the aid of the accompanying drawings, in which:
- figure 1 schematically shows a kitchen utensil comprising a first portion including a handle of the utensil, and a second portion including a working portion of the utensil, according to the present invention, wherein the kitchen utensil is a pizza cutter.
- figure 2 schematically shows the utensil of figure 1, wherein the aforesaid first portion and the aforesaid second portion are separated from one another;
- figure 3 schematically shows an exploded view of the utensil of figure 1 according to an embodiment variation of the invention, wherein the kitchen utensil is a spoon;
- figure 4 schematically shows a detail of the utensil of figure 1, with separate parts, according to a further embodiment variation of the invention;
- figure 5 schematically shows a partially cut-away view of a detail of the utensil of figure 1, according to a further embodiment variation of the invention;
- figures 6 and 7 respectively show a partially cut-away view and an magnified longitudinal sectional view of a detail of the utensil of figure 1 according to a further embodiment variation of the invention.

### Detailed Description of the Invention

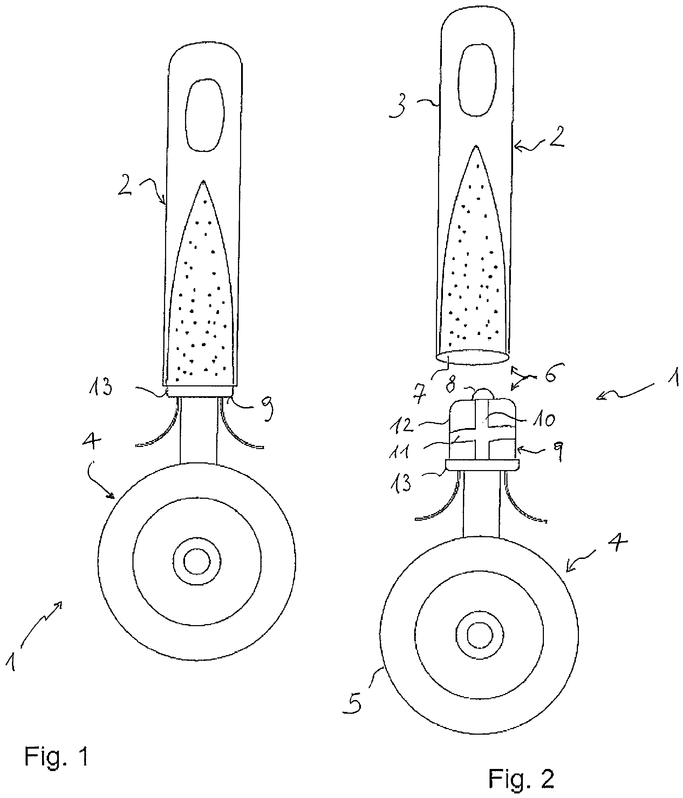

Referring to figures 1-2, the numeral **1** generally depicts a kitchen utensil according to the present invention, of the type comprising a first portion **2** including a handle **3** of the utensil, and a second portion **4** including a working portion **5** of the utensil.

In particular, in the example of the aforesaid figures, the working portion **5** takes the form of a circular blade, the utensil **1** being a so-called pizza cutter.

According to the invention, the utensil **1** comprises combining means generally depicted by the numeral **6,** for a removable coupling between the first portion **2** and the second portion **4.**

Still according to the invention, the first portion **2** and the second portion **4** are made of two different materials, and specifically the first portion **2** is made of a first material, preferably a plastic material, while the second portion **4** is made of a second material, preferably a metal material.

Moreover according to the invention, the first material of the first portion **2** and the second material of the second portion **4** are individually and essentially completely recyclable.

Preferred materials are selected from the group comprising, as regards the first material, polypropylene, acrylonitrile butadiene styrene (ABS), polyamide, polystyrene, polyamide 6,6, possibly loaded with fibers and/or glass spheres and comprising, as regards the second material, steel, Zamak (zinc alloy) and aluminium.

In regard to the aforesaid combining means **6,** it is to be noted that they are selected from the group comprising snap-fit combining means, bayonet combining means, interlocked combining means, pressure combining means and similar combining means.

According to the invention, the combining means **6** comprise a housing seat **7** obtained in the first portion **2** at an end thereof, and a push-in element **8** removably engaging the housing seat **7** and obtained in an end portion of the second portion **4** and jutting from the working portion **5** of the same second portion **4** of the utensil **1.**

Still according to the example of figures 1-2 and according to the present invention, the utensil **1** further comprises a sleeve element **9** removably interposed between the first portion **2** and the second portion **4.**

In practice, the sleeve element **9** is an additional element of the combining means **6** for optimally coupling and decoupling the first portion **2** and the second portion **4** of the utensil **1,** as will be better evident hereinafter.

In detail and according to the example of the aforesaid figures, the sleeve element **9** is preferably provided with at least one side opening, and in particular it comprises a side wall **12** having a longitudinally-arranged opening extended thereon, the opening being generally depicted by the numeral **10,** and a circumferentially arranged opening depicted by the numeral **11,** even if one or more obliquely extending openings can be provided on the sleeve element.

Accordingly, the sleeve element **9** is basically a so-called expansion insert, which is fitted on the push-in element **8** of the second portion **4** and inserted into the housing seat **7** of the first portion **2,** thereby obtaining a permanent coupling between the first portion **2** and the second portion **4** of the utensil **1.**

For this purpose, the width or diameter of the aforesaid push-in element **8** is slightly greater than the inner width or inner diameter of the sleeve element **9,** i.e. the passage provided therein and depicted by the numeral **14.**

This is also thanks to an edge **13** provided at one end of the sleeve element **9** and protruding with respect to the side wall **12** of the same sleeve element **9** and which is intended to abut against an end of the first portion **2** at the housing seat **7** provided therein.

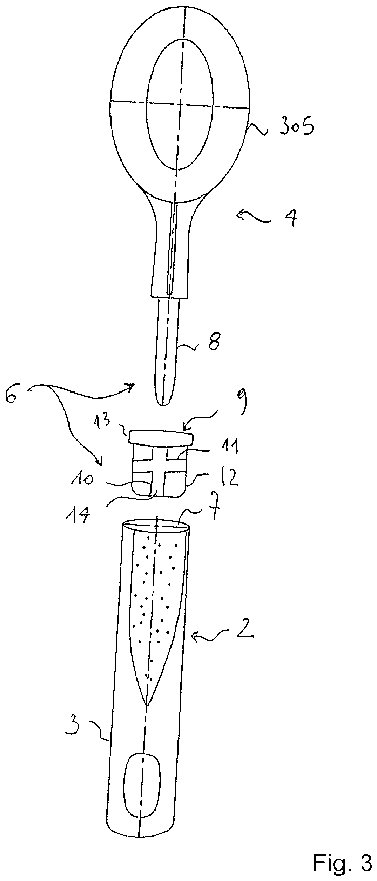

Now, referring to the example in figure 3, a kitchen utensil according to an embodiment variation of the present invention is described, the kitchen utensil being entirely similar to the above-described utensil **1,** whose description is referred to, except for the fact that the former comprises a different working portion.

In detail, in the example of figure 3, a utensil **301** is described wherein portions structurally and functionally corresponding to those of the aforesaid utensil **1** hold the same reference numbers used in figures 1 and 2.

In particular the utensil **301,** in the example of Figure 3 shown in separate parts, comprises a first portion **2** made of a first material and including a handle **3,** and a second portion **4** made of a second material and including a working portion **305** of the utensil, which working portion in this case takes the form of a spoon-like portion.

As described above, the utensil **301** comprises combining means **6** for a removable coupling between the first portion **2** and the second portion **4,** the combining means being selected from the group comprising snap-fit combining means, bayonet combining means, interlocked combining means, pressure combining means and similar combining means and, according to the example of figure 3, taking the form of a housing seat **7** obtained in the first portion **2** at an end thereof, and a push-in element **8** removably engaging the housing seat **7,** which push-in element is obtained in an end portion of the second portion **4** and is jutting from the working portion **305** of the same second portion **4** of the utensil **301.**

Also in this case, a sleeve element **9** is provided and, in this particular case, is shown separated from the first portion **2** and the second portion **4,** and is structurally and functionally similar to the sleeve element described above with reference to figures 1 and 2, whose description should be used as reference.

With respect to the first material and the second material of the utensil **301** what stated for the above-described utensil **1** is still valid, whose description should be considered as reference.

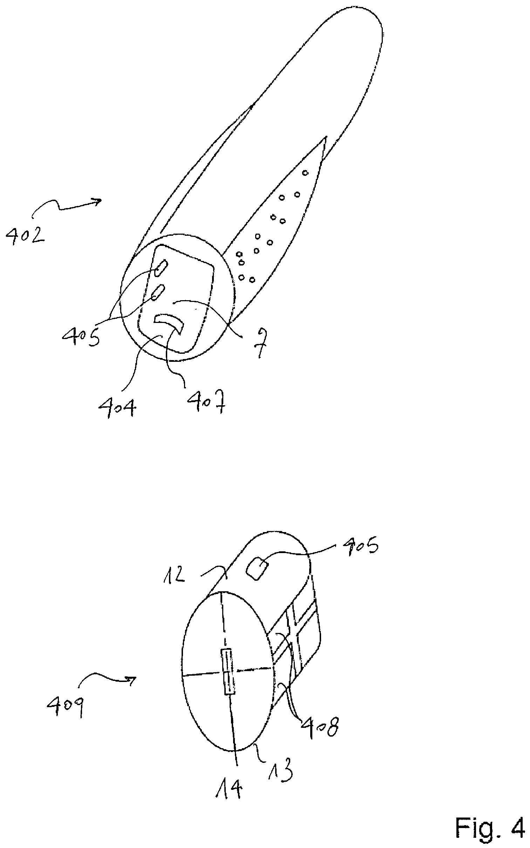

In the example of Figure 4, a detail of a kitchen utensil according to an embodiment variation of the present invention is schematically shown, wherein for the structurally and functionally portions corresponding to those of the above-described utensils the same reference numerals used in figures 1-3 are hold.

In detail, figure 4 shows a first portion **402** and a sleeve element **409** of a kitchen utensil according to the invention, which are separate from one another and similar to the first portion and respectively to the sleeve element of the above described utensils **1** and **301** whose description is referred to, and wherein a plurality of rounded male elements, i.e. in practice beveled jutting elements depicted by the numeral **405,** are basically provided in the combining means together with a respective plurality of female elements, i.e. in practice recesses or openings depicted by the numerals **407** and **408.**

In particular, according to the example of Figure 4, a first pair of male elements **405** together with opposing male elements are arranged on a side wall **12** of the sleeve element **409,** and a second and a third pair of male elements **405** are arranged in opposing pairs on an inner wall **404** of a housing seat **7** of the first portion **402;** again, a first pair of rounded female elements **407** together with opposing female elements are arranged on the same inner wall **404** of the first portion **402** at the housing seat **7** provided therein, whereas a second and a third pair of female elements **408** are arranged in opposing pairs on the side wall **12** of the sleeve element **409** in the form of open windows on the same side wall **12,** the sleeve element **409** having in this case a mesh shape, but being also possible to provide the second and third pair of round-shaped female elements, i.e. beveled cavities, on a sleeve element with a solid side wall, the latter possibility being not shown in the figures.

In practice, the male elements and female elements guarantee that the sleeve element **409** is simply and firmly inserted into the first portion **402** then withstanding both tensile and pressure stresses, also thanks to an edge **13** provided in the sleeve element **409** as contemplated with reference to figures 1-3, whose description should be considered as reference.

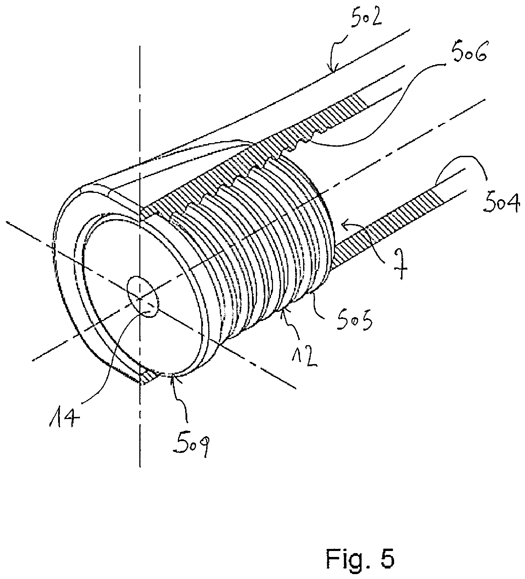

In the example of Figure 5, a detail of a kitchen utensil according to an embodiment variation of the present invention is schematically shown, wherein for the portions structurally and functionally corresponding to those of the utensils described above with reference to figures 1-4 the same reference numerals are hold.

In detail, Figure 5 shows a first portion **502** and a sleeve element **509** of a kitchen utensil according to the invention, combined with one another and similar, respectively, to the first portion and the sleeve element of the above-described utensils whose description is referred to, and wherein in practice, in the combining means, a threaded portion **505** and a complementary indented portion **506** are provided respectively at a side wall **12** of the sleeve element **509** and on an inner wall **504** of a housing seat **7** provided in the first portion **502.**

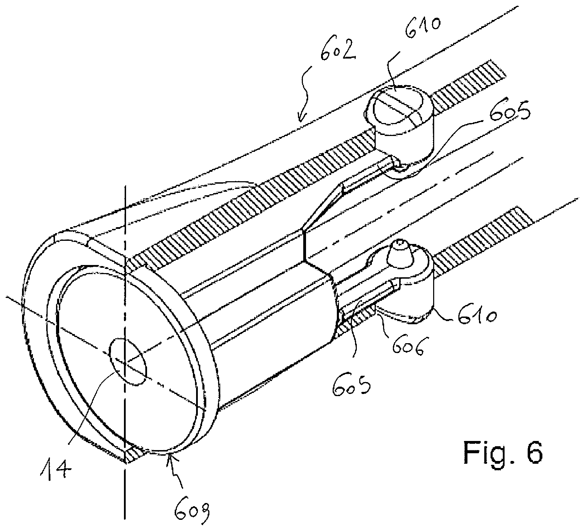

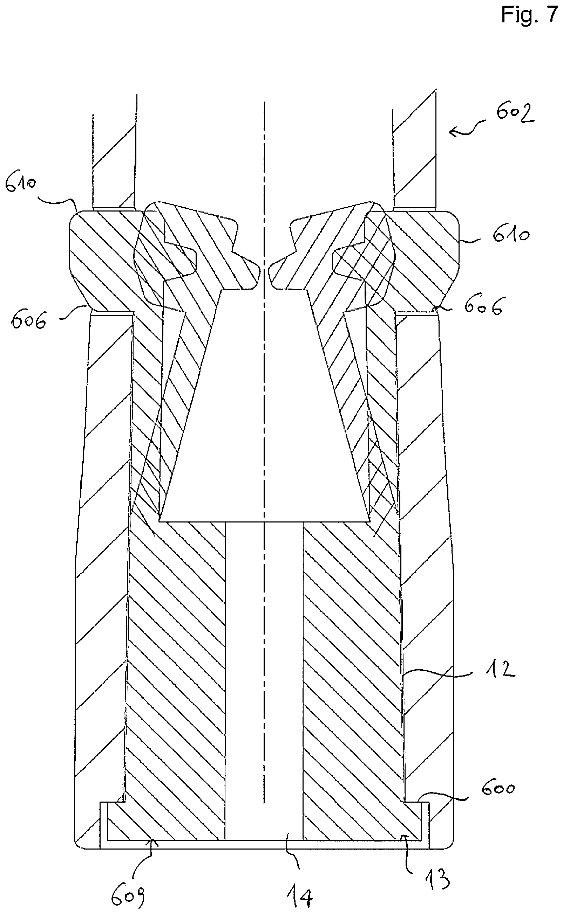

In the example of Figures 6 and 7, a detail of a kitchen utensil according to an embodiment variation of the present invention is shown, wherein for the portions structurally and functionally corresponding to those of the utensils described above with reference to figures 1-5 the same reference numerals are hold.

In detail, figures 6 and 7 show a first portion **602** and a sleeve element **609** of a kitchen utensil according to the invention, combined with one another and similar, respectively, to the first portion and the sleeve element of the above described utensils whose description is referred to, and wherein in practice, in the combining means, a pair of bending elements **605** extended from a side wall **12** of the sleeve element **609** and a pair of through-holes **606** extended in the first portion **602** are provided.

The bending elements **605,** substantially opposing to each other, in practice are elongated elements, preferably made in one piece with the side wall **12** of the sleeve element **609,** and precisely able to bend, each of them having a protruding head **610** at a respective free end, the protruding head being intended to engage and disengage a respective through-hole **606** arranged on the first portion **602**.

The protruding heads **610** may extend through the through-holes **606** beyond the outer surface of the first portion **602,** as shown in the example of figures 6 and 7, or else they may remain more inward so as to not protrude, the latter example being not shown in the figures.

In case of protruding heads extending beyond the outer surface of the first portion of the utensil, they can be pressed by the user of this utensil in order to facilitate the release of the sleeve element from the first portion of the utensil, whereas in case of protruding heads not extending beyond the outer surface of the first portion, they may be pushed inwardly within the first portion, for example by means of a pointed element.

In any case, the bending elements **605** preferably have teeth **611** opposing to the protruding heads **610,** the teeth constituting countering elements that limit the bending movement of the bending elements **605** themselves, as illustrated in the example of Figure 7, wherein the bending elements **605** are shown in a first position in which the respective protruding heads **610** engage the respective through holes **606,** and in a second position where the through-holes are disengaged from the protruding heads.

It should be noted that in the example of figures 6 and 7, the sleeve element **609** is provided with a protruding edge **13** which rests on a step **600** inside a housing seat **7** of the first portion **602,** this characteristic being provided also in the utensil shown with reference to the example of figure 5.

According to what above stated and according to the invention, the present utensil can then be a knife, a spoon, a fork, a ladle, a can opener, a bottle opener, a corkscrew, a whisk, a grater, a pair of scissors, a pizza cutter, a dough cutter, a little mould, a blade sharpener, a rolling pin and similar kitchen utensils, or a combination of two or more thereof.

Therefore, according to what above stated and referring to the examples of figures 1-7 whose description is referred to, the present invention also provides a kit comprising a first plurality of first portions of kitchen utensils of the aforesaid type, wherein each first portion includes a respective handle, and a second plurality of second portions of kitchen utensils of the aforesaid type, wherein each second portion includes at least one respective working portion, wherein combining means of the aforesaid type are provided for a removable coupling of any first portion with any second portion, wherein each first portion is made of a first material of the aforesaid type, and each second portion is made of a second material of the aforesaid type and different from the first material, and wherein the first material and the second material are essentially completely recyclable.

According to the invention, according to a preferred embodiment of the aforesaid kit, the number of the first portions of the aforesaid first plurality of first portions is lower than the number of the aforesaid second portions of the aforesaid second plurality of second portions.

In practice, according to the present invention, the aforesaid kit comprises first portions advantageously equal to each other, and second portions which may be coupled to any one of the first portions independently of the respective working portion, thanks to complementary combining means, regardless of which first portion is coupled to which second portion.

In this way a user can use the same first portion and thus the same handle, with different second portions, as needed.

For example, the same first portion can be initially used with a second portion having a spoon-like working portion, and then with a different second portion having a fork-like working portion.

Therefore the same first portion, and thus the same handle, can be used with different second portions depending on the requirements, for example by using the present utensil initially as can opener, then as bottle opener, then as a knife, then again as a spoon and then as a fork, all simply by manually coupling and decoupling a first portion with a desired second portion.

In this regard, only simple operations are required in order to couple or separate the first portion and the second portion, depending on the type of combining means, but in any case the operations are carried out easily and quickly.

The advantages of the present invention, that have already been highlighted in the above description, can be summarized by pointing out that a fully recyclable kitchen utensil is provided which can be washed as needed without the risk of structural or aesthetic damage and which is particularly versatile thanks to a universal handle removably coupled with different working portions, and therefore a complete kit of any kitchen utensil with small bulkiness and reduced weight can be provided.

In order to meet incidental and specific requirements, several variations and modifications could be made by a field technician to the illustrated and described embodiments of present invention, moreover they are all included in the protection scope of the invention as defined by the following claims.

## Claims

1. Kitchen utensil (1; 301) comprising a first portion (2; 402; 502; 602) including a handle (3) of said utensil, a second portion (4) including at least one working portion (5; 305) of said utensil, and combining means (6) for a removable coupling of said first portion with said second portion, wherein said combining means comprise at least one housing seat (7) obtained in said first portion (2; 402; 502; 602), at least one push-in element (8) jutting from said at least one working portion (5) and removably engaging said at least one housing seat (7), wherein said combining means further comprise at least one sleeve element (9; 409; 509; 609) removably inserted in said housing seat (7) and removably fitted on the push-in element (8), wherein said first portion is made of a first material and said second portion is made of a second material different from said first material, wherein after having separated said first portion and said second portion from one another, said first material and said second material are essentially individually and completely recyclable without further division, and wherein said at least one sleeve element (9) comprises at least one side opening (10; 11), said at least one sleeve element (9) preferably constituting a so-called expansion insert, or wherein said combining means (6) comprise a plurality of rounded male elements (405) and a respective plurality of female elements (408) preferably rounded too and complementary to said male elements (405), wherein said male elements (405) are arranged on a side wall (12) of said at least one sleeve element (409) and/or on an inner wall (404) of said first portion (402) at said at least one housing seat (7), and wherein said female elements (408) are arranged on said side wall (12) of said at least one sleeve element (40) and/or on said inner wall (404) of said first portion (402) at said at least one housing seat (7), or wherein said combining means (6) comprise a threaded portion (505) and an indented portion (506) at a side wall (12) of said at least one sleeve element (509) and respectively on an inner wall (504) of said first portion (502) at said at least one housing seat (7), or wherein said combining means (6) comprise at least one bending element (605) extended from a side wall of said at least one sleeve element (609), and at least one through-hole (606) extended in said first portion (602), wherein said at least one bending element (605) has a protruding head (610) at a free end thereof, said protruding head (610) being intended to engage-disengage said at least one through-hole (606) .

2. Kitchen utensil according to claim 1, wherein said first material is a plastic material, preferably a plastic material selected from the group comprising polypropylene, acrylonitrile butadiene styrene (ABS), polyamide, polystyrene, polyamide 6,6, possibly loaded with fibers and/or glass spheres.

3. Kitchen utensil according to claim 1 or 2, wherein said second material is a metal material, preferably a metal material selected from the group comprising steel, Zamak (zinc alloy), aluminium.

4. Kitchen utensil according to any one of the preceding claims, wherein said utensil is a knife, a spoon, a fork, a ladle, a can opener, a bottle opener, a corkscrew, a whisk, a grater, a pair of scissors, a pizza cutter, a dough cutter, a little mould, a blade sharpener, a rolling pin or a combination of two or more thereof.

5. Kit comprising a first plurality of first portions and a second plurality of second portions of kitchen utensils according to any one of claims 1-4, wherein each first portion is removably combinable with a respective second portion by combining means according to one of the alternatives of claim 1.

6. Kit according to claim 5, wherein the number of said first portions of said first plurality of first portions is lower than the number of said second portions of said second plurality of second portions.

## Patentansprüche

1. Küchenwerkzeug (1; 301) mit einem ersten Abschnitt (2; 402; 502; 602), der einen Griff (3) des Werkzeugs aufweist, mit einem zweiten Abschnitt (4), der zumindest einen Arbeitsabschnitt (5; 305) des Werkzeugs aufweist, und mit Kopplungsmitteln (6) für eine lösbare Kopplung des ersten Abschnitts mit dem zweiten Abschnitt, wobei die Kopplungsmittel zumindest einen in dem ersten Abschnitt (2; 402; 502; 602) eingearbeiteten Aufnahmesitz (7), zumindest ein von dem zumindest einen Arbeitsabschnitt (5) abstehendes und mit dem zumindest einen Aufnahmesitz (7) lösbar in Eingriff stehendes Einschubelement (8) aufweist, wobei
die Kopplungsmittel ferner mindestens ein in den Aufnahmesitz (7) lösbar eingesetztes und lösbar am Einschubelement (8) angebrachtes Hülsenelement (9; 409; 509; 609) umfassen,
wobei der erste Abschnitt aus einem ersten Material und der zweite Abschnitt aus einem zweiten Material besteht, das sich von dem ersten Material unterscheidet, wobei nach dem Trennen des ersten Abschnitts und des zweiten Abschnitts voneinander das erste Material und das zweite Material im Wesentlichen einzeln und vollständig ohne weitere Teilung recycelbar sind, und wobei
das mindestens eine Hülsenelement (9) mindestens eine Seitenöffnung (10; 11) aufweist, wobei das mindestens eine Hülsenelement (9) vorzugsweise einen sogenannten Spreizeinsatz bildet, oder wobei
die Kopplungsmittel (6) eine Vielzahl abgerundeter männlicher Elemente (405) und eine jeweilige Vielzahl von weiblichen Elementen (408) umfassen, die auch abgerundet und zu den männlichen Elementen (405) komplementär ausgebildet sind, wobei die männlichen Elemente (405) an einer Seitenwand (12) des mindestens einen Hülsenelements (409) und/oder an einer Innenwand (404) des ersten Abschnitts (402) an dem mindestens einen Aufnahmesitz (7) angeordnet sind, und wobei die weiblichen Elemente (408) an der Seitenwand (12) des mindestens einen Hülsenelements (40) und/oder an der Innenwand (404) des ersten Abschnitts (402) an dem mindestens einen Aufnahmesitz (7) angeordnet sind, oder wobei
die Kopplungsmittel (6) umfassen einen Gewindeabschnitt (505) und einen verzahnten Abschnitt (506) an einer Seitenwand (12) des zumindest einen Hülsenelements (509) bzw. an einer Innenwand (504) des ersten Abschnitts (502) an dem zumindest einen Aufnahmesitz (7), oder wobei
die Kopplungsmittel (6) mindestens ein Biegeelement (605) umfassen, das sich von einer Seitenwand des mindestens einen Hülsenelements (609) erstreckt, und mindestens ein Durchgangsloch (606), das sich in dem ersten Abschnitt (602) erstreckt, wobei das mindestens eine Biegeelement (605) einen vorstehenden Kopf (610) an einem freien Ende davon aufweist, wobei der vorstehende Kopf (610) dazu bestimmt ist, mit dem mindestens einen Durchgangsloch (606) in Eingriff und außer Eingriff zu kommen.

2. Küchenwerkzeug nach Anspruch 1, **dadurch gekennzeichnet, dass** das erste Material ein Kunststoffmaterial ist, vorzugsweise ein Kunststoffmaterial ausgewählt aus der Gruppe Polypropylen, Acrylnitril-Butadien-Styrol (ABS), Polyamid, Polystyrol, Polyamid 6, 6, gegebenenfalls beladen mit Fasern und/oder Glaskugeln.

3. Küchenwerkzeug nach Anspruch 1 oder 2, wobei das zweite Material ein Metallmaterial, vorzugsweise ein Metallmaterial ausgewählt aus der Gruppe Stahl, Zamak (Zinklegierung), Aluminium ist.

4. Küchenwerkzeug nach einem der vorhergehenden Ansprüche, wobei das Werkzeug ein Messer, ein Löffel, eine Gabel, eine Schöpfkelle, ein Dosenöffner, ein Flaschenöffner, ein Korkenzieher, ein Schneebesen, eine Küchenreibe, eine Schere, ein Pizza-Schneider, ein Teigschneider, eine kleine Form, ein Klingenschärfer, eine Küchenrolle oder eine Kombination von zwei oder mehr davon ist.

5. Kit, umfassend eine erste Vielzahl von ersten Abschnitten und eine zweite Vielzahl von zweiten Abschnitten von Küchenwerkzeugen nach einem der Ansprüche 1 bis 4, wobei jeder erste Abschnitt mit einem jeweiligen zweiten Abschnitt durch Kombinieren von Mitteln gemäß einer der Alternativen von Anspruch 1 lösbar koppelbar ist.

6. Kit nach Anspruch 5, wobei die Anzahl der ersten Abschnitte der ersten Vielzahl von ersten Abschnitten geringer ist als die Anzahl der zweiten Abschnitte der zweiten Vielzahl von zweiten Abschnitten.

## Revendications

1. Ustensile de cuisine (1; 301) comprenant une première portion (2; 402; 502; 602) dont un manche (3) dudit ustensile, une seconde portion (4) dont au moins une portion fonctionnelle (5; 305) dudit ustensile, et des moyens de combinaison (6) pour un couplage amovible de ladite première portion avec ladite seconde portion, dans lequel lesdits moyens de combinaison comprennent au moins un siège de logement (7) réalisé dans la première portion (2; 402; 502; 602), au moins un élément encastrable (8) faisant saillie de ladite au moins une portion fonctionnelle (5) et engageant de manière amovible ledit au moins un siège de logement (7), dans lequel
lesdits moyens de combinaison comprennent en outre un élément de manchon (9; 409; 509; 609) inséré de manière amovible dans ledit siège de logement (7) et monté de manière amovible sur l'élément encastrable (8),
dans lequel ladite première portion est réalisée d'un premier matériau et ladite seconde portion est réalisée d'un second matériau différent dudit premier matériau, dans lequel ledit premier matériau et ledit second matériau sont essentiellement individuellement et complètement recyclables sans autre division après avoir séparé ladite première portion et ladite seconde portion l'une de l'autre, et dans lequel
ledit au moins un élément de manchon (9) comprend au moins une ouverture latérale (10; 11), ledit au moins un élément de manchon (9) constituant de préférence un si-dit insert d'expansion, ou dans lequel
lesdits moyens de combinaison (6) comprennent une pluralité d'éléments mâles arrondis (405) et une pluralité respective d'éléments femelles (408) de préférence également arrondis et complémentaires auxdits éléments mâles (405), dans lequel les éléments mâles (405) sont disposés sur une paroi latérale (12) dudit au moins un élément de manchon (409) et/ou sur une paroi interne (404) de ladite première portion (402) en correspondance dudit au moins un siège de logement (7), et dans lequel lesdits éléments femelles (408) sont disposés sur ladite paroi latérale (12) dudit au moins un élément de manchon (40) et/ou sur ladite paroi interne (404) de ladite première portion (402) en correspondance dudit au moins un siège de logement (7), ou dans lequel
lesdits moyens de combinaisons (6) comprennent une portion filetée (505) et une portion dentelée (506) en correspondance d'une paroi latérale (12) dudit au moins un élément de manchon (509) et respectivement sur une paroi interne (504) de ladite première portion (502) en correspondance dudit au moins un siège de logement (7), ou dans lequel
lesdits moyens de combinaison (6) comprennent au moins un élément de flexion (605) s'étendant à partir d'une paroi latérale dudit au moins un élément de manchon (609), et au moins un trou traversant (606) s'étendant dans ladite première portion (602), dans lequel ledit au moins un élément de flexion (605) a une tête saillante (610) en correspondance d'une extrémité libre de celui-ci, ladite tête saillante (610) étant étendue pour engager-désengager ledit au moins un trou traversant (606).

2. Ustensile de cuisine selon la revendication 1, dans lequel ledit premier matériau est un matériau plastique, de préférence un matériau plastique sélectionné parmi le groupe comprenant polypropylène, acrylonitrile butadiène styrène (ABS), polyamide, polystyrène, polyamide 6, 6, éventuellement chargé de fibres et/ou de sphères de verre.

3. Ustensile de cuisine selon la revendication 1 ou 2, dans lequel le second matériau est un matériau métallique, de préférence un matériau métallique sélectionné parmi le groupe comprenant acier, Zamak (alliage de zinc), aluminium.

4. Ustensile de cuisine selon l'une quelconque des revendications précédentes, dans lequel ledit ustensile de cuisine est un couteau, une cuillère, une fourchette, une louche, un ouvre-boîte, un ouvre-bouteille, un tire-bouchon, un fouet, une râpe, une paire de ciseaux, un coupe-pizza, un coupe-pâte, un petit moule, un affûteur de lame, un rouleau à pâtisserie ou une combinaison de deux ou plusieurs d'entre eux.

5. Kit comprenant une première pluralité de premières portions et une seconde pluralité de secondes portions d'ustensiles de cuisine selon l'une quelconque des revendications 1-4, dans lequel chaque première portion est combinée de manière amovible avec une seconde portion respective par des moyens de combinaison selon l'une des alternatives de la revendication 1.

6. Kit selon la revendication 5, dans lequel le nombre desdites premières portions de ladite première pluralité de premières portions est inférieur au nombre desdites secondes portions de ladite seconde pluralité de secondes portions.
